# EUROPÄISCHE PATENTSCHRIFT

(11) **EP 1 938 050 B1**
(45) Veröffentlichungstag und Bekanntmachung des Hinweises auf die Patenterteilung: **02.07.2014**
(21) Anmeldenummer: 06806268.6
(22) Anmeldetag: 13.10.2006
(51) Int. Cl.: G01D 11/28

(54) **ANZEIGEVORRICHTUNG FÜR EIN KRAFTFAHRZEUG MIT EINEM SCHWENKBAREN ZEIGER DER EINEN ERSTEN UND/ODER EINEN ZWEITEN LICHTLEITERBEREICH AUFWEIST**
DISPLAY DEVICE FOR A MOTOR VEHICLE PROVIDED WITH A SWIVELLING INDICATOR HAVING FIRST AND/OR SECOND OPTICAL WAVE GUIDE AREAS
DISPOSITIF D'AFFICHAGE DESTINE A UN VEHICULE AUTOMOBILE ET COMPRENANT UNE AIGUILLE PIVOTANTE PRESENTANT UNE PREMIERE ET/OU UNE DEUXIEME ZONE GUIDE D'ONDES

(30) Priorität: 14.10.2005 DE 102005049721
(43) Veröffentlichungstag der Anmeldung: 02.07.2008
(73) Patentinhaber: Johnson Controls Automotive Electronics GmbH, 75196 Remchingen (DE)
(72) Erfinder: SUESS, Manfred, 75196 Remchingen (DE); BEHRENDS, Heinrich, 76332 Bad Herrenalb (DE); WITZEMANN, Isabel, 75045 Walzbachtal (DE)
(74) Vertreter: Schwöbel, Thilo K.
(86) Internationale Anmeldenummer: PCT/EP2006/009925
(87) Internationale Veröffentlichungsnummer: WO 2007/042322

(56) Entgegenhaltungen:
- WO-A1-2006/005821
- WO-A1-2006/024747
- DE-A1- 2 838 261
- DE-A1- 2 839 196
- DE-A1- 10 145 036
- DE-A1- 19 617 553
- DE-A1- 19 904 597

## Beschreibung

Die vorliegende Erfindung betrifft eine Anzeigevorrichtung für ein Kraftfahrzeug mit einem der Blickrichtung zugewandten Anzeigebereich, wobei in Blickrichtung hinter dem Anzeigebereich ein um eine Drehachse schwenkbarer Zeiger vorgesehen ist. Insbesondere ist hierbei eine direkt oder indirekt an dem schwenkbaren Zeiger befestigt vorgesehene zweite Beleuchtungseinrichtung vorgesehen ist, wobei der Zeiger einen zweiten Lichtleiterbereich zur Transmission von von der zweiten Beleuchtungseinrichtung ausgehendem zweiten Licht aufweist.

Eine solche Anzeigevorrichtung ist allgemein bekannt. Beispielsweise ist aus der deutschen Offenlegungsschrift DE 199 04 597 A1 eine Anzeigevorrichtung für ein Kraftfahrzeug bekannt, wobei ein Zifferblatt und ein in Blickrichtung dahinter angeordneter Zeiger vorgesehen ist, wobei der Zeiger mittels einer Lichtquelle, die in Blickrichtung hinter dem Zeiger angeordnet ist beleuchtet wird und wobei der Zeiger als Lichtleitkörper fungiert. Die Zeigerbeleuchtung kann hierbei eine drehfest mit dem Zeiger verbundene Lichtquelle aufweisen. Hierbei ist es nachteilig, dass der Zeiger vollständig für den Lichttransport durch den Zeiger vorgesehen ist und es die bekannte Anzeigevorrichtung lediglich erlaubt, den Zeiger zum Transport von Licht für die Zeigerbeleuchtung einzusetzen.

Eine ähnliche Anzeigevorrichtung ist auch aus der DE 10 145 036 A1 bekannt.

Aufgabe der vorliegenden Erfindung ist es, eine Anzeigevorrichtung zu schaffen, die eine Mehrfachnutzung des Zeigers ermöglicht, die weiterhin einfach und kostengünstig herstellbar ist und die insbesondere auch durch die Mehrfachnutzung des Zeigers eine geringe Bautiefe aufweist, so dass sie insgesamt sehr kompakt herstellbar ist und damit eine leichte Montierbarkeit in einem Fahrzeug ermöglicht.

Diese Aufgabe wird durch eine Anzeigevorrichtung für ein Kraftfahrzeug mit einem der Blickrichtung zugewandten Anzeigebereich gelöst, wobei in Blickrichtung hinter dem Anzeigebereich ein um eine Drehachse schwenkbarer Zeiger vorgesehen ist, wobei eine direkt oder indirekt an dem schwenkbaren Zeiger befestigt vorgesehene zweite Beleuchtungseinrichtung vorgesehen ist, wobei der Zeiger einen zweiten Lichtleiterbereich zur Transmission von von der zweiten Beleuchtungseinrichtung ausgehendem zweiten Licht aufweist, wobei in Blickrichtung hinter dem schwenkbaren Zeiger eine Leiterplatte mit einer darauf vorgesehenen ersten Beleuchtungseinrichtung vorgesehen ist, wobei der schwenkbare Zeiger einen ersten Lichtleiterbereich zur Transmission von von der ersten Beleuchtungseinrichtung ausgehendem ersten Licht zum Anzeigebereich und/oder zu einem äußeren Rand des Anzeigebereichs aufweist. Hierdurch ist es erfindungsgemäß vorteilhaft möglich, dass der hinter dem Anzeigebereich vorgesehene schwenkbare Zeiger um die Drehachse schwenkbar ist und dennoch der Anzeigebereich von der Beleuchtungseinrichtung beleuchtet wird, welche hinter dem schwenkbaren Zeiger angebracht ist. Auf diese Weise wird die Kontaktierung bzw. Ansteuerung der Beleuchtungseinrichtung in erfindungsgemäß sehr einfacher und robuster Weise mittels einer Leiterplatte möglich, welche sich hinter dem schwenkbaren Zeiger befindet. Durch die zweite Beleuchtungseinrichtung und den zweiten Lichtleiterbereich zur Transmission von von der zweiten Beleuchtungseinrichtung ausgehendem zweiten Licht ist es möglich, auch die Stellung des schwenkbaren Zeigers dadurch sichtbar zu machen, dass - etwa bei Dunkelheit - die Spitze dieses schwenkbaren Zeigers beleuchtet wird und so dessen Stellung für einen Benutzer der Anzeigevorrichtung erkennbar ist. Es ist hierdurch erfindungsgemäß weiterhin möglich, dass die Beleuchtung des schwenkbaren Zeigers bzw. dessen Spitze durch die zweite Beleuchtungseinrichtung besonders effizient möglich ist, weil die zweite Beleuchtungseinrichtung fest mit dem schwenkbaren Zeiger verbunden ist und daher optimal zu dem zweiten Lichtleiterbereich positionierbar ist. Erfindungsgemäß ist es bevorzugt, dass die zweite Beleuchtungseinrichtung an dem schwenkbaren Zeiger indirekt befestigt vorgesehen ist, nämlich insbesondere an einer flexiblen Leiterplatte befestigt ist, welche ihrerseits (direkt) mit dem schwenkbaren Zeiger verbunden ist oder auch lediglich indirekt mit dem schwenkbaren Zeiger verbunden ist.

Die erfindungsgemäße Aufgabe wird weiterhin durch eine Anzeigevorrichtung für ein Kraftfahrzeug mit einem der Blickrichtung zugewandten Anzeigebereich gelöst, wobei in Blickrichtung hinter dem Anzeigebereich ein um eine Drehachse schwenkbarer Zeiger vorgesehen ist, wobei eine direkt oder indirekt an dem schwenkbaren Zeiger befestigt vorgesehene zweite Beleuchtungseinrichtung vorgesehen ist, wobei der Zeiger einen zweiten Lichtleiterbereich zur Transmission von von der zweiten Beleuchtungseinrichtung ausgehendem zweiten Licht aufweist, wobei eine ebenfalls direkt oder indirekt an dem schwenkbaren Zeiger befestigt vorgesehene erste Beleuchtungseinrichtung vorgesehen ist, wobei der Transport von von der ersten Beleuchtungseinrichtung ausgehendem ersten Licht zum Anzeigebereich und/oder zu einem äußeren Rand des Anzeigebereichs vorgesehen ist. Hierdurch ist es vorteilhaft möglich, sowohl die erste als auch die zweite die Beleuchtungseinrichtung optimal für einen Lichtransport zu der jeweils zu beleuchtenden Stelle zu positionieren. Es ist hierdurch erfindungsgemäß weiterhin möglich, dass die Beleuchtung des schwenkbaren Zeigers bzw. dessen Spitze durch die zweite Beleuchtungseinrichtung besonders effizient möglich ist, weil die zweite Beleuchtungseinrichtung fest mit dem schwenkbaren Zeiger verbunden ist. Erfindungsgemäß ist es bevorzugt, dass die erste und zweite Beleuchtungseinrichtung an dem schwenkbaren Zeiger indirekt befestigt vorgesehen ist, nämlich insbesondere an einer flexiblen Leiterplatte befestigt ist, welche ihrerseits (direkt) mit dem schwenkbaren Zeiger verbunden ist oder auch lediglich indirekt mit dem schwenkbaren Zeiger verbunden ist.

erfindungsgemäß wird die Aufgabe ferner gelöst durch eine Anzeigevorrichtung für ein Kraftfahrzeug mit einem der Blickrichtung zugewandten Anzeigebereich, wobei in Blickrichtung hinter dem Anzeigebereich ein um eine Drehachse schwenkbarer Zeiger vorgesehen ist, wobei in Blickrichtung hinter dem schwenkbaren Zeiger eine Leiterplatte mit einer darauf vorgesehenen ersten Beleuchtungseinrichtung vorgesehen ist, wobei der schwenkbare Zeiger einen ersten Lichtleiterbereich zum Transport von von der ersten Beleuchtungseinrichtung ausgehendem ersten Licht zum Anzeigebereich und/oder zu einem äußeren Rand des Anzeigebereichs aufweist, wobei der Zeiger einen zweiten Lichtleiterbereich zur Transmission von von der ersten Beleuchtungseinrichtung ausgehendem ersten Licht oder zur Transmission von von einer zweiten Beleuchtungseinrichtung ausgehendem zweiten Licht aufweist. Hierdurch ist es erfindungsgemäß vorteilhaft möglich, dass der hinter dem Anzeigebereich vorgesehene schwenkbare Zeiger um die Drehachse schwenkbar ist und dennoch der Anzeigebereich von der Beleuchtungseinrichtung beleuchtet wird, welche hinter dem schwenkbaren Zeiger angebracht ist. Auf diese Weise wird die Kontaktierung bzw. Ansteuerung der Beleuchtungseinrichtung in erfindungsgemäß sehr einfacher und robuster Weise mittels einer Leiterplatte möglich, welche sich hinter dem schwenkbaren Zeiger befindet. Insbesondere ist es bei der Verwendung lediglich der ersten Beleuchtungseinrichtung möglich, dass sowohl) der schwenkbare Zeiger als auch der Anzeigebereich von der ersten Beleuchtungseinrichtung beleuchtet wird.

Bevorzugt ist ferner, dass die direkt oder indirekt an dem schwenkbaren Zeiger befestigt vorgesehene zweite Beleuchtungseinrichtung oder die direkt oder indirekt an dem schwenkbaren Zeiger befestigt vorgesehene erste und zweite Beleuchtungseinrichtung mittels eines die Schwenkbewegung des schwenkbaren Zeigers um die Drehachse kompensierenden Kontaktierungsmittels, insbesondere ein flexible Leiterplatte elektrisch kontaktiert vorgesehen ist. Hierdurch ist es möglich, dass die mit dem Zeiger drehfest verbundene Beleuchtungseinrichtung bzw. die mit dem Zeiger drehfest verbundenen Beleuchtungseinrichtungen optimal an beispielsweise eine Leiterplatte in der Anzeigevorrichtung angeschlossen werden können.

Ferner ist bevorzugt, dass in Blickrichtung hinter dem schwenkbaren Zeiger eine Leiterplatte vorgesehen ist, wobei das Kontaktierungsmittel mittels einer Steckverbindung, insbesondere eine LIF-Steckverbindung (low insertion force) oder einer ZIF-Steckverbindung (zero insertion force), mit der Leiterplatte mechanisch verbunden vorgesehen ist. Hierdurch ist ein sehr einfacher und schnell und kostengünstig realisierbarer Zusammenbau der Anzeigevorrichtung möglich, weil zum Anschluss der zweiten Beleuchtungseinrichtung lediglich eine Steckverbindung zwischen der flexiblen Leiterplatte und der Leiterplatte hergestellt werden muss.

Erfindungsgemäß ist weiterhin bevorzugt, dass die erste Beleuchtungseinrichtung relativ zur Drehachse radial weiter innen angeordnet ist und dass die zweite Beleuchtungseinrichtung relativ zur Drehachse radial weiter außen angeordnet ist. Hierdurch ist es möglich, durch entsprechende Anordnung von Beleuchtungseinrichtungen auf der Leiterplatte bzw. in unmittelbarer Nähe der Leiterplatte zu einer sehr effizienten Lichtverteilung zu kommen, die eine optimale Beleuchtung der Anzeigevorrichtung und ihrer verschiedenen, insbesondere beweglich zueinander vorgesehenen Teile ermöglicht, ohne dass der Aufbau, insbesondere hinsichtlich einer Mehrzahl von Leiterplatten, unnötig verkompliziert wird. Insbesondere ist es durch eine solche Anordnung der Beleuchtungseinrichtungen möglich, dass diejenigen Beleuchtungseinrichtungen, welche Licht vergleichsweise weit nach vorne zu dem Betrachter hin (d. h. entgegen der Blickrichtung) transportieren sollen, durch die Bewegung von etwa zwischen solchen Beleuchtungseinrichtungen und dem Anzeigebereich angeordneten beweglichen Elementen (beispielsweise schwenkbare Zeiger) nicht behindert werden.

Ferner ist bevorzugt, dass in Blickrichtung vor dem Anzeigebereich ein weiterer und ebenfalls um die Drehachse schwenkbarer Zeiger vorgesehen ist. Hierdurch ist es erfindungsgemäß möglich, zwei anzuzeigende Werte - beispielsweise die Geschwindigkeit und eine vorgegebene Geschwindigkeit, etwa eines Tempomaten oder dergleichen - gleichzeitig an der Anzeigevorrichtung darzustellen.

Ferner ist bevorzugt, dass der Zeiger und der weitere Zeiger unabhängig voneinander um die Drehachse schwenkbar vorgesehen sind. Hierdurch ist eine besonders einfache und für einen Benutzer verständliche Anzeige der verschiedenen Informationen auf der Anzeigevorrichtung möglich.

Ferner ist bevorzugt, dass der Anzeigebereich ein Ziffernblatt ist. Insbesondere dient die Anzeigevorrichtung der Anzeige der Geschwindigkeit eines Fahrzeugs oder auch der Anzeige der Motordrehzahl eines Fahrzeugs. Weitere Beispiele von anzuzeigenden Informationen sind eine Tankanzeige zusammen mit einer Anzeige des momentanen Verbrauchs oder andere Anzeigen. Hierbei hat sich die Anzeige mittels eines Ziffernblattes durchgesetzt, weil dies in besonderer Weise den ergonomischen Anforderungen beim Autofahren entgegenkommt, da ein Fahrer während der Fahrt nicht durch eine zu große Anzahl von verschiedenen Informationselementen überfordert werden soll.

Ferner ist bevorzugt, dass die erste Beleuchtungseinrichtung und/oder die zweite Beleuchtungseinrichtung eine oder mehrere Leuchtdioden umfasst. Hierdurch ist eine besonders robuste Realisierung der Anzeigevorrichtung möglich. Weiterhin ist eine besonders kostengünstige und leicht herzustellende Anzeigevorrichtung möglich, wobei es darüber hinaus möglich ist, dass unter Verwendung von Leuchtdioden, die in unterschiedlichen Farben Licht abstrahlen können und/oder durch die Kombination von mehreren Leuchtdioden, die jeweils immer die gleiche, jedoch untereinander unterschiedliche Farben darzustellen vermögen, eine farbliche Differenzierung der Anzeigevorrichtung möglich ist, wobei diese farbliche Differenzierung nicht nur statisch vorgesehen sein kann, sondern sich auch dynamisch ändern kann, beispielsweise wenn ein anzuzeigender Wert eine kritische Schwelle überschreitet oder unterschreitet.

Ausführungsbeispiele der Erfindung sind in der Zeichnung dargestellt und in der nachfolgenden Beschreibung näher erläutert.
- Figur 1: zeigt eine Schnittdarstellung durch eine erste Ausführungsform der erfindungsgemäßen Anzeigevorrichtung,
- Figur 2: zeigt eine perspektivische Darstellung eines Teils der ersten Ausführungsform der Anzeigevorrichtung und
- Figur 3: zeigt eine Schnittdarstellung durch eine zweite Ausführungsform der erfindungsgemäßen Anzeigevorrichtung.
- Figuren 4 und 5: zeigen eine perspektivische Darstellung bzw. eine Schnittdarstellung durch eine dritte Ausführungsform der erfindungsgemäßen Anzeigevorrichtung.

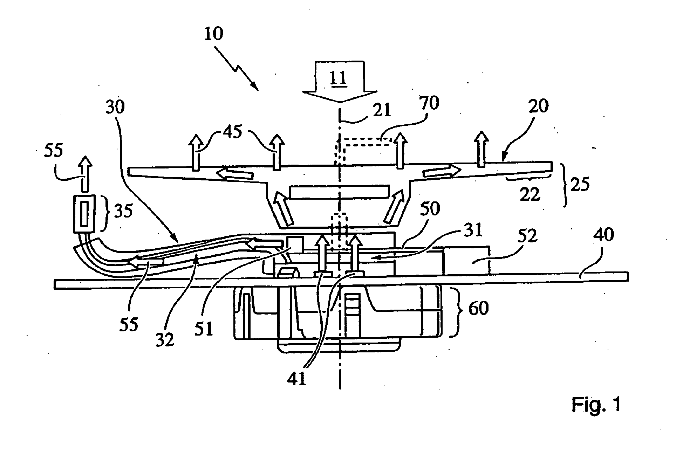

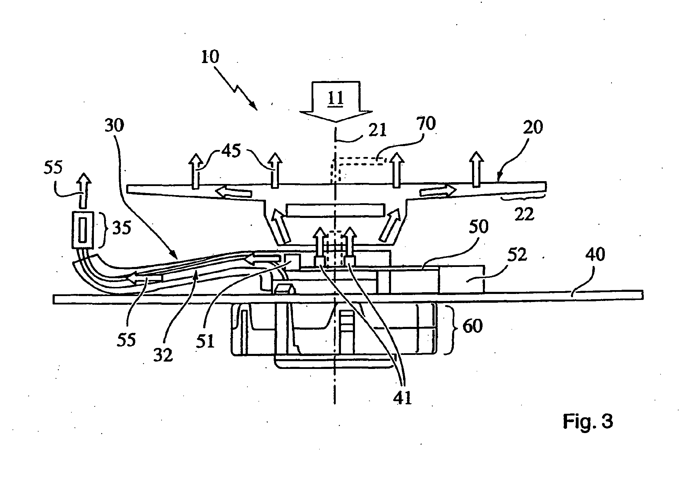

In Figur 1 ist eine erste Ausführungsform einer erfindungsgemäßen Anzeigevorrichtung 10 für ein Kraftfahrzeug (nicht dargestellt) abgebildet. In Figur 3 ist eine zweite Ausführungsform der erfindungsgemäßen Anzeigevorrichtung 10 abgebildet. Die Anzeigevorrichtung 10 weist in beiden Ausführungsformen eine Leiterplatte 40, einen um eine Drehachse 21 schwenkbaren Zeiger 30 und einen Anzeigebereich 20 auf. Der Anzeigebereich 20 ist insbesondere im wesentlichen kreisrund vorgesehen und um die Drehachse 21 zentriert. Der um die Drehachse 21 schwenkbare Zeiger 30 verläuft in einem zentralen (radial inneren) Bereich in etwa senkrecht zur Drehachse 21 und damit etwa parallel zum Anzeigebereich 20. In einem radial äußeren Bereich erstreckt sich der schwenkbare Zeiger 30 radial außen vom äußeren Rand 22 des Anzeigebereichs 20, im wesentlichen senkrecht, so dass der radial äußere Bereich des schwenkbaren Zeigers 30 aus einer Blickrichtung 11 heraus betrachtet radial außen am Anzeigebereich 20 sichtbar ist. Es ist auch möglich (jedoch nicht dargestellt), dass der schwenkbare Zeiger 30 radial nicht weiter reicht als der äußere Rand 22 des Anzeigebereichs 20. Aus der Blickrichtung 11 betrachtet ist der Aufbau der Anzeigevorrichtung 10 derart vorgesehen, dass in einer ersten Ebene (näher zur Blickrichtung 11) der Anzeigebereich 20, dann der schwenkbare Zeiger 30 und anschließend die Leiterplatte 40 vorgesehen ist.

Bei beiden Ausführungsformen der erfindungsgemäßen Anzeigevorrichtung 10 ist eine zweite Beleuchtungseinrichtung 51 mit dem schwenkbaren Zeiger 30 fixiert vorgesehen bzw. verbunden vorgesehen. Die zweite Beleuchtungseinrichtung 51 koppelt zweites Licht 55 in einen Lichtleiterbereich des schwenkbaren Zeigers 30 ein, wobei dieser Lichtleiterbereich auch als zweiter Lichtleiterbereich 32 des schwenkbaren Zeigers 30 bezeichnet wird. Der zweite Lichtleiterbereich 32 ist im schwenkbaren Zeiger 30, insbesondere radial außen, vorgesehen und dient zur Leitung bzw. zur Transmission des zweiten Lichtes 55 zu einem äußeren Bereich (welcher in Figur 1 mit dem Bezugszeichen 35 bezeichnet ist) des schwenkbaren Zeigers 30. Der äußere Bereich 35 des Zeigers 30 ist aus der Blickrichtung 11 für einen Benutzer der Anzeigevorrichtung 10 sichtbar oder aber der äußere Bereich 35 des Zeigers 30 ist verdeckt (nicht dargestellt) und nur in eingeschaltetem Zustand der zweiten Beleuchtungseinrichtung 51 sichtbar. Damit ist das zweite Licht 55 durch einen solchen Benutzer der Anzeigevorrichtung 10 sichtbar. Die zweite Beleuchtungseinrichtung 51 ist erfindungsgemäß mittels eines die Schwenkbewegung des schwenkbaren Zeigers 30 um die Drehachse 21 kompensierenden Kontaktierungsmittels 50 bewerkstelligt. Hierzu ist das kompensierende Kontaktierungsmittel 50 beispielsweise als eine flexible Leiterplatte 50 realisiert, welche insbesondere mittels einer Steckverbindung 52 mit der Leiterplatte 40 elektrisch kontaktiert wird. Hierbei handelt es sich bei der Steckverbindung insbesondere um einen LIF-Stecker bzw. um einen ZIF-Stecker.

In der ersten Ausführungsform (Figur 1) ist auf der Leiterplatte 40 eine erste Beleuchtungseinrictitung 41 vorgesehen, durch welche erstes Licht 45 in Richtung zum Anzeigebereich 20 abgestrahlt wird. Hierbei muss das erste Licht 45 die Ebene des schwenkbaren Zeigers 30 durchqueren. Dies ist erfindungsgemäß derart realisiert, dass zusätzlich zum zweiten Lichtleiterbereich 32 ein erster Lichtleiterbereich 31 im Zeiger 30 vorgesehen ist, durch den hindurch das erste Licht 45 von der ersten Beleuchtungseinrichtung 41 in Richtung zum Anzeigebereich 20 transportiert wird. Der erste Lichtleiterbereich 31 ist erfindungsgemäß insbesondere als ein um die Drehachse 21 zentriert vorgesehener zentraler Bereich des schwenkbaren Zeigers 30 vorgesehen.

Bei der zweiten Ausführungsform (Figur 3) ist die erste Beleuchtungseinrichtung 41 ebenfalls drehfest mit dem schwenkbaren Zeiger 30 verbunden vorgesehen. Insbesondere ist es bevorzugt, dass die erste Beleuchtungseinrichtung 41 - wie in Figur 3 dargestellt - oberhalb bzw. an der Oberseite bzw. auf der dem Anzeigebereich 20 zugewandten Seite des schwenkbaren Zeigers 30 angeordnet ist. Dann ist es besonders leicht möglich, dass das von der ersten Beleuchtungseinrichtung 41 ausgehende erste Licht 45 zum Anzeigebereich 20 und/oder zum äußeren Rand 22 des Anzeigebereichs 20 geleitet bzw. transportiert wird.

Bei beiden Ausführungsformen weist die Anzeigevorrichtung 10 zum Transport bzw. zur Transmission des ersten Lichtes 45 ausgehend von einer Ebene oberhalb des zentralen Teils des schwenkbaren Zeigers 30 einen Lichtleitkörper 25 auf, der im nachfolgenden auch als Tellerlichtleiter 25 bezeichnet wird. Erfindungsgemäß ist es möglich, dass der Anzeigebereich 20 durch eine Anzeigeschicht bzw. eine Folienschicht realisiert ist, welche auf dem Tellerlichtleiter 25 aufgebracht ist, wobei auf der Folie (nicht dargestellt) etwa eine Skaleneinteilung oder dergleichen realisiert sein kann, welche auch bei Dunkelheit sichtbar ist, wenn das erste Licht 45 aus dem Tellerlichtleiter 25 in Richtung zum Anzeigebereich 20 bzw. an dessen Rand heraustritt. Bei der Ausführung des Anzeigebereichs 20 und des Tellerlichtleiters 25 kann es erfindungsgemäß entweder vorgesehen sein, dass beide direkt benachbart und/oder verbunden, beispielsweise verklebt oder sonst wie befestigt sind, oder aber, dass beide beabstandet vorgesehen sind, etwa der Anzeigebereich 20 in einem (zur Vermeidung übermäßig großer Streuverluste) vergleichsweise geringen Abstand über (d.h. in Richtung zur Blickrichtung 11 verschoben) dem Tellerlichtleiter 25 angeordnet ist.

Ein Motor 60 ist in beiden Ausführungsformen unterhalb der Leiterplatte 40 angeordnet. Mittels des Motors 60 ist es möglich, sowohl den schwenkbaren Zeiger 30 als auch einen in den Figuren 1 und 3 mit dem Bezugszeichen 70 lediglich angedeuteten weiteren Zeiger unabhängig voneinander um die Drehachse zu drehen. Hierdurch ist es erfindungsgemäß möglich, dass durch die Anzeigevorrichtung 10 eine Mehrzahl von Informationen einem Benutzer dargestellt bzw. angezeigt werden, insbesondere die Geschwindigkeit und eine Sollgeschwindigkeit bzw. eine vorgegebene Geschwindigkeit, etwa eines Tempomaten, eine Tankinhaltsanzeige und eine Momentanverbrauchsanzeige oder dergleichen.

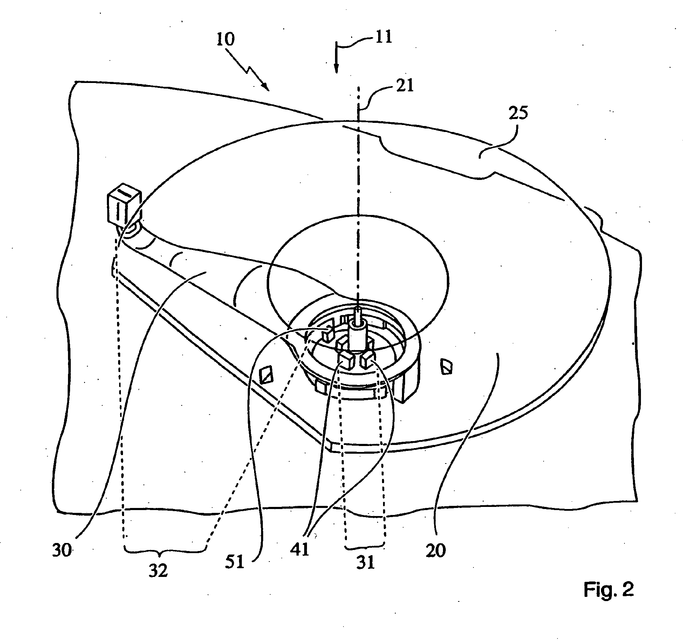

In Figur 2 ist eine schematische perspektivische Darstellung der ersten Ausführungsform der Anzeigevorrichtung 10 bzw. Teile von ihr dargestellt. Erkennbar ist, dass der Anzeigebereich 20 bzw. der Tellerlichtleiter 25 im wesentlichen rund vorgesehen ist. Weiterhin ist der Anzeigebereich im wesentlichen um die Drehachse 21 zentriert vorgesehen. Der schwenkbare Zeiger 30 weist den ersten Lichtleiterbereich 31 in einem zentralen, um die Drehachse 21 herum angeordneten Bereich auf und weiterhin den zweiten Lichtleiterbereich 32 in einem radial äußeren Bereich des schwenkbaren Zeigers 30 auf. Die erste Beleuchtungseinrichtung 41 wird in dem Ausführungsbeispiel gemäß Figur 2 mittels vier Leuchtdioden realisiert, welche um die Drehachse 21 herum auf der Leiterplatte 40 (in Figur 2 nicht dargestellt) im Bereich des ersten Lichtleiterbereichs 31 angeordnet sind. Hierdurch wird erreicht, dass der Anzeigebereich 20 rund um die Drehachse 21 herum im wesentlichen gleichmäßig durch die Leuchtdioden der ersten Beleuchtungseinrichtung 41 beleuchtet wird, so dass ein gleichmäßiger Eindruck für einen Benutzer der Anzeigevorrichtung 10 realisiert wird.

Der schwenkbare Zeiger 30 ist insbesondere im wesentlichen aus einem durchsichtigen Material hergestellt, beispielsweise PMMA (Polymethylmethacrylat), bzw. derart hergestellt, dass er durchsichtiges Material umfasst.

Erfindungsgemäß ist es weiterhin vorgesehen, dass der weitere Zeiger 70 ebenfalls von der ersten Beleuchtungseinrichtung 41 beleuchtet wird bzw. dass das erste Licht 45 auch zur Beleuchtung des weiteren Zeigers 70 eingesetzt wird. Erfindungsgemäß kann es darüber hinaus weiterhin auch vorgesehen sein, dass die erste Beteuchtungseinrichtung 41 aus zwei Gruppen von Leuchtdioden bzw. allgemein Lichtquellen besteht, wobei die erste Gruppe der ersten Beleuchtungseinrichtung 41 lediglich den Anzeigebereich 20 beleuchtet und wobei die zweite Gruppe der ersten Beleuchtungseinrichtung 41 nur den weiteren Zeiger 70 beleuchtet. Hierdurch ist es möglich, den weiteren Zeiger 70 und den Anzeigebereich 20 unterschiedlich, etwa in unterschiedlicher Farbe oder dergleichen, zu beleuchten. Bei einer solchen getrennten Beleuchtung des Anzeigebereichs 20 einerseits und des weiteren Zeigers 70 andererseits über die erste bzw. zweite Gruppe von Lichtquellen der ersten Beleuchtungseinrichtung 41 ist es erfindungsgemäß insbesondere vorgesehen (jedoch nicht in den Figuren dargestellt), dass die zweite Gruppe von Lichtquellen radial gesehen innen, d.h. näher zur Drehachse 21 hin, angeordnet vorgesehen ist und dass die erste Gruppe von Lichtquellen radial gesehen außen, d.h. weiter von der Drehachse 21 entfernt, angeordnet vorgesehen ist. Diese unterschiedliche Beleuchtung von Anzeigebereich 20 und weiterem Zeiger 70 ist jedoch erfindungsgemäß nicht notwendig. Es kann wie eingangs beschrieben auch vorgesehen sein, dass mittels der ersten Beleuchtungseinrichtung 41 sowohl der Anzeigebereich 20 als auch der weitere Zeiger 70 im wesentlichen in ähnlicher Weise, d. h. in gleicher Farbe, beleuchtet wird. Erfindungsgemäß ist es sowohl bei der ersten als auch bei der zweiten Beleuchtungseinrichtung 41, 51 möglich, dass lediglich eine oder aber eine Mehrzahl an Leuchtdioden oder anderen Lichtquellen Verwendung findet/finden.

Die flexible Leiterplatte 50 ist insbesondere als eine sogenannte Flexfolie vorgesehen und umfasst metallische Leiterbahnen, die beispielsweise in einer Kunststoffmatrix eingebettet sind. Eine solche flexible Leiterplatte 50 erstreckt sich (in ungebogenem Zustand) insbesondere in einer Ebene und wird erfindungsgemäß derart in oder an der Anzeigevorrichtung 10 montiert, dass die flexible Leiterplatte 50 zumindest auf einem Teilbereich in einer solchen Ebene ausgerichtet ist, die im wesentlichen parallel zur Drehachse 21 steht. Hierdurch ist es möglich, dass durch die Flexibilität des Kontaktierungsmittels 50 die Schwenkbewegung des schwenkbaren Zeigers 30 kompensiert wird.

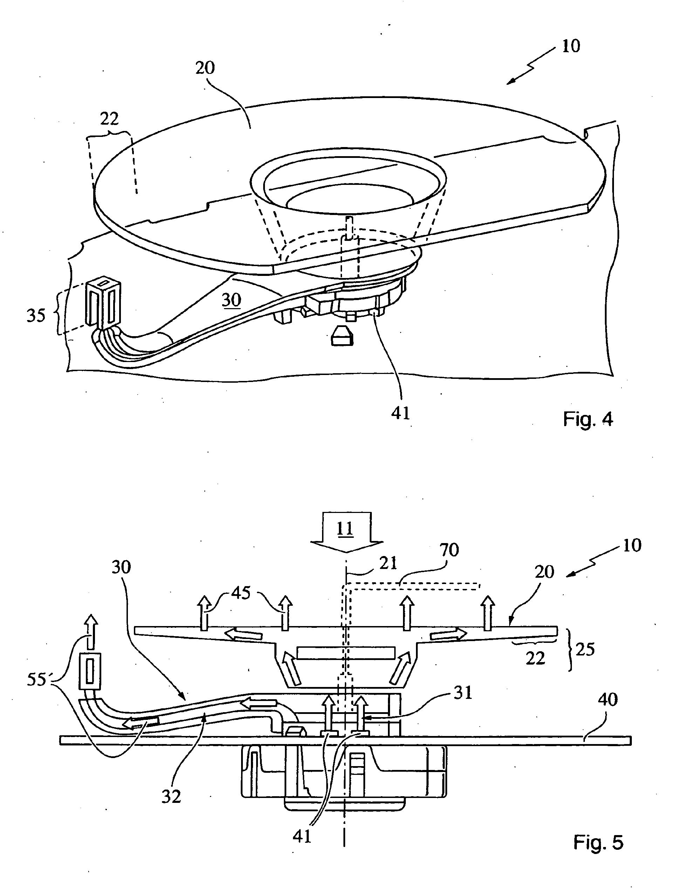

In den Figuren 4 und 5 sind eine perspektivische Darstellung (Figur 4) und eine Schnittdarstellung (Figur 5) durch eine dritte Ausführungsform der erfindungsgemäßen Anzeigevorrichtung schematisch dargestellt.

Die Anzeigevorrichtung 10 weist auch bei der dritten Ausführungsform die Leiterplatte 40, den um die Drehachse 21 schwenkbaren Zeiger 30 und den Anzeigebereich 20 auf. Der Anzeigebereich 20 ist auch bei der dritten Ausführungsform insbesondere im wesentlichen kreisrund vorgesehen und um die Drehachse 21 zentriert. Der um die Drehachse 21 schwenkbare Zeiger 30 verläuft in dem zentralen (radial inneren) Bereich in etwa senkrecht zur Drehachse 21 und damit etwa parallel zum Anzeigebereich 20. In dem radial äußeren Bereich erstreckt sich der schwenkbare Zeiger 30 radial außen vom äußeren Rand 22 des Anzeigebereichs 20, im wesentlichen senkrecht, so dass der radial äußere Bereich des schwenkbaren Zeigers 30 aus der Blickrichtung 11 heraus betrachtet radial außen am Anzeigebereich 20 sichtbar ist. Es ist auch möglich (jedoch nicht dargestellt), dass der schwenkbare Zeiger 30 radial nicht weiter reicht als der äußere Rand 22 des Anzeigebereichs 20. Aus der Blickrichtung 11 betrachtet ist der Aufbau der Anzeigevorrichtung 10 derart vorgesehen, dass in einer ersten Ebene (näher zur Blickrichtung 11) der Anzeigebereich 20, dann der schwenkbare Zeiger 30 und anschließend die Leiterplatte 40 vorgesehen ist.

Bei der dritten Ausführungsform der erfindungsgemäßen Anzeigevorrichtung 10 ist bevorzugt lediglich die erste Beleuchtungseinrichtung 41 vorgesehen, die sowohl erstes Licht 45 in Richtung zum Anzeigebereich 20 abstrahlt als auch weiteres Licht 55' in den zweiten Lichtleiterbereich 32 des schwenkbaren Zeigers 30 einkoppelt. Die erste Beleuchtungseinrichtung 41 ist bei der dritten Ausführungsform auf der Leiterplatte 40 angeordnet. Hierbei muss - wie bei den beiden zuvor beschriebenen Ausführungsformen - das erste Licht 45 die Ebene des schwenkbaren Zeigers 30 durchqueren, was wiederum derart realisiert ist, dass zusätzlich zum zweiten Lichtleiterbereich 32 der erste Lichtleiterbereich 31 im Zeiger 30 vorgesehen ist, durch den hindurch das erste Licht 45 von der ersten Beleuchtungseinrichtung 41 in Richtung zum Anzeigebereich 20 transportiert wird. Der erste Lichtleiterbereich 31 ist wiederum insbesondere als ein um die Drehachse 21 zentriert vorgesehener zentraler Bereich des schwenkbaren Zeigers 30 vorgesehen. Der zweite Lichtleiterbereich 32 ist im schwenkbaren Zeiger 30, insbesondere radial außen, vorgesehen und dient zur Leitung bzw. zur Transmission des weiteren Lichts 55' zu dem äußeren Bereich 35 des schwenkbaren Zeigers 30. Besonders vorteilhaft ist es gemäß der dritten Ausführungsform der Erfindung, dass die erste Beleuchtungseinrichtung 41 ausreicht, um sowohl den ersten Lichtleiterbereich 31 als auch den zweiten Lichtleiterbereich 32 zu beleuchten. Insbesondere entfällt damit die sonst auf dem Unterflurzeiger übliche Kappe (nicht dargestellt).

Alternativ zu der in den Figuren 4 und 5 dargestellten Variante der dritten Ausführungsform kann es auch vorgesehen sein, zusätzlich zu der ersten Beleuchtungseinrichtung 41 eine (in den Figuren 4 und 5 nicht dargestellte) zweite Beleuchtungseinrichtung auf der Leiterplatte 40 anzuordnen, so dass das weitere Licht 55' von der zweiten Beleuchtungseinrichtung in den zweiten Lichtleiterbereich 32 eingekoppelt wird. Die Montage der ersten Beleuchtungseinrichtung 41 und gegebenenfalls auch der zweiten Beleuchtungseinrichtung 51 ist damit gemäß der dritten Ausführungsform besonders einfach und kostengünstig durchführbar.

Auch bei der dritten Ausführungsform weist die Anzeigevorrichtung 10 zum Transport bzw. zur Transmission des ersten Lichtes 45 ausgehend von einer Ebene oberhalb des zentralen Teils des schwenkbaren Zeigers 30 den Lichtleitkörper 25 auf. Weiterhin ist es wie bei der ersten und zweiten Ausführungsform auch bei der dritten Ausführungsform möglich, dass der Anzeigebereich 20 durch eine Anzeigeschicht bzw. eine Folienschicht realisiert ist, welche auf dem Tellerlichtleiter 25 aufgebracht ist, wobei auf der Folie (nicht dargestellt) etwa eine Skaleneinteilung oder dergleichen realisiert sein kann, welche auch bei Dunkelheit sichtbar ist, wenn das erste Licht 45 aus dem Tellerlichtleiter 25 in Richtung zum Anzeigebereich 20 bzw. an dessen Rand heraustritt. Auch bei der dritten Ausführungsform kann es bei der Ausführung des Anzeigebereichs 20 und des Tellerlichtleiters 25 entweder vorgesehen sein, dass beide direkt benachbart und/oder verbunden, beispielsweise verklebt oder sonst wie befestigt sind, oder aber, dass beide beabstandet vorgesehen sind, etwa der Anzeigebereich 20 in einem (zur Vermeidung übermäßig großer Streuverluste) vergleichsweise geringen Abstand über (d.h. in Richtung zur Blickrichtung 11 verschoben) dem Tellerlichtleiter 25 angeordnet ist. Weiterhin ist auch ein Motor 60 bei der dritten Ausführungsform unterhalb der Leiterplatte 40 angeordnet. Mittels des Motors 60 ist es möglich, sowohl den schwenkbaren Zeiger 30 als auch den in Figur 5 mit dem Bezugszeichen 70 lediglich angedeuteten weiteren Zeiger unabhängig voneinander um die Drehachse zu drehen. Erfindungsgemäß kann es auch bei der dritten Ausführungsform vorgesehen sein, dass der weitere Zeiger 70 ebenfalls von der ersten Beleuchtungseinrichtung 41 beleuchtet wird bzw. dass das erste Licht 45 auch zur Beleuchtung des weiteren Zeigers 70 eingesetzt wird. Erfindungsgemäß kann es darüber hinaus weiterhin auch vorgesehen sein, dass die erste Beleuchtungseinrichtung 41 aus zwei Gruppen von Leuchtdioden bzw. allgemein Lichtquellen besteht, wobei die erste Gruppe der ersten Beleuchtungseinrichtung 41 lediglich den Anzeigebereich 20 beleuchtet und wobei die zweite Gruppe der ersten Beleuchtungseinrichtung 41 nur den weiteren Zeiger 70 beleuchtet. Hierdurch ist es möglich, den weiteren Zeiger 70 und den Anzeigebereich 20 unterschiedlich, etwa in unterschiedlicher Farbe oder dergleichen, zu beleuchten. Bei einer solchen getrennten Beleuchtung des Anzeigebereichs 20 einerseits und des weiteren Zeigers 70 andererseits über die erste bzw. zweite Gruppe von Lichtquellen der ersten Beleuchtungseinrichtung 41 ist es erfindungsgemäß insbesondere vorgesehen (jedoch nicht in den Figuren dargestellt), dass die zweite Gruppe von Lichtquellen radial gesehen innen, d.h. näher zur Drehachse 21 hin, angeordnet vorgesehen ist und dass die erste Gruppe von Lichtquellen radial gesehen außen, d.h. weiter von der Drehachse 21 entfernt, angeordnet vorgesehen ist. Diese unterschiedliche Beleuchtung von Anzeigebereich 20 und weiterem Zeiger 70 ist jedoch erfindungsgemäß nicht notwendig. Es kann wie eingangs beschrieben auch vorgesehen sein, dass mittels der ersten Beleuchtungseinrichtung 41 sowohl der Anzeigebereich 20 als auch der weitere Zeiger 70 im wesentlichen in ähnlicher Weise, d. h. in gleicher Farbe, beleuchtet wird. Erfindungsgemäß ist es auch bei der dritten Ausführungsform sowohl bei der ersten als auch bei der zweiten Beleuchtungseinrichtung 41, 51 möglich, dass lediglich eine oder aber eine Mehrzahl an Leuchtdioden oder anderen Lichtquellen Verwendung findet/finden.

### Bezugszeichenliste

- 10: Anzeigevorrichtung
- 11: Blickrichtung
- 20: Anzeigebereich
- 21: Drehachse
- 22: Rand des Anzeigebereichs
- 25: Tellerlichtleiter
- 30: Zeiger
- 31: Erster Lichtleiterbereich
- 32: Zweiter Lichtleiterbereich
- 35: Endabschnitt des Zeigers
- 40: Leiterplatte
- 41: Erste Beleuchtungseinrichtung
- 45: erstes Licht
- 50: Kontaktierungsmittel
- 51: Zweite Beleuchtungseinrichtung
- 52: Steckverbindung
- 55: zweites Licht
- 55': weiteres Licht
- 60: Motor
- 70: weiterer Zeiger

## Patentansprüche

1. Anzeigevorrichtung (10) für ein Kraftfahrzeug mit einem der Blickrichtung (11) zugewandten Anzeigebereich (20), wobei in Blickrichtung (11) hinter dem Anzeigebereich (20) ein um eine Drehachse (21) schwenkbarer Zeiger (30) vorgesehen ist, **dadurch gekennzeichnet, dass** eine direkt oder indirekt an dem schwenkbaren Zeiger (30) befestigt vorgesehene zweite Beleuchtungseinrichtung (51) vorgesehen ist, wobei der Zeiger (30) einen zweiten Lichtleiterbereich (32) zur Transmission von von der zweiten Beleuchtungseinrichtung (51) ausgehendem zweiten Licht (55) aufweist, wobei in Blickrichtung (11) hinter dem schwenkbaren Zeiger (30) eine Leiterplatte (40) mit einer darauf vorgesehenen ersten Beleuchtungseinrichtung (41) vorgesehen ist, wobei der schwenkbare Zeiger (30) einen ersten Lichtleiter-bereich (31) zum Transport von von der ersten Beleuchtungseinrichtung (41) ausgehendem ersten Licht (45) zum Anzeigebereich (20) und/oder zu einem äußeren Rand (22) des Anzeigebereichs (20) aufweist, wobei in Blickrichtung (11) vor dem Anzeigebereich (20) ein weiterer und ebenfalls um die Drehachse (21) schwenkbarer Zeiger (70) vorgesehen ist, wobei vorgesehen ist, dass der weitere schwenkbare Zeiger (70) von einer zweiten Gruppe von bevorzugt radial näher bei der Drehachse (21) angeordneten Lichtquellen der ersten Beleuchtungseinrichtung (41) beleuchtet vorgesehen ist und wobei vorgesehen ist, dass der Anzeigebereich (20) von einer ersten Gruppe von gegenüber der zweiten Gruppe bevorzugt radial weiter von der Drehachse (21) beabstandet angeordneten Lichtquellen der ersten Beleuchtungseinrichtung (41) beleuchtet vorgesehen ist..

2. Anzeigevorrichtung (10) für ein Kraftfahrzeug mit einem der Blickrichtung (11) zugewandten Anzeigebereich (20), wobei in Blickrichtung (11) hinter dem Anzeigebereich (20) ein um eine Drehachse (21) schwenkbarer Zeiger (30) vorgesehen ist, **dadurch gekennzeichnet, dass** eine direkt oder indirekt an dem schwenkbaren Zeiger (30) befestigt vorgesehene zweite Beleuchtungseinrichtung (51) vorgesehen ist, wobei der Zeiger (30) einen zweiten Lichtleiterbereich (32) zur Transmission von von der zweiten Beleuchtungseinrichtung (51) ausgehendem zweiten Licht (55) aufweist, wobei eine ebenfalls direkt oder indirekt an dem schwenkbaren Zeiger (30) befestigt vorgesehene erste Beleuchtungseinrichtung (41) vorgesehen ist, wobei die Transmission von von der ersten Beleuchtungseinrichtung (41) ausgehendem ersten Licht (45) zum Anzeigebereich (20) und/oder zu einem äußeren Rand (22) des Anzeigebereichs (20) vorgesehen ist.

3. Anzeigevorrichtung (10) nach einem der vorhergehenden Ansprüche, **dadurch gekennzeichnet, dass** die direkt oder indirekt an dem schwenkbaren Zeiger (30) befestigt vorgensehene zweite Beleuchtungseinrichtung (51) oder die direkt oder indirekt an dem schwenkbaren Zeiger (30) befestigt vorgesehene erste und zweite Beleuchtungseinrichtung (41, 51) mittels eines die Schwenkbewegung des schwenkbaren Zeigers (30) um die Drehachse (21) kompensierenden Kontaktierungsmittels (50), insbesondere eine flexible Leiterplatte, elektrisch kontaktiert vorgesehen ist.

4. Anzeigevorrichtung (10) nach einem der vorhergehenden Ansprüche, **dadurch gekennzeichnet, dass** in Blickrichtung (11) hinter dem schwenkbaren Zeiger (30) eine Leiterplatte (40) vorgesehen ist, wobei das Kontaktierungsmittel (50) mittels einer Steckverbindung (52), insbesondere eine LIF-Steckverbindung oder eine ZIF-Steckverbindung, mit der Leiterplatte (40) mechanisch verbunden vorgesehen ist.

5. Anzeigevorrichtung (10) nach einem der vorhergehenden Ansprüche, **dadurch gekennzeichnet, dass** die erste Beleuchtungseinrichtung (41) relativ zur Drehachse (21) radial weiter innen angeordnet ist und dass die zweite Beleuchtungseinrichtung (51) relativ zur Drehachse (21) radial weiter außen angeordnet ist.

6. Anzeigevorrichtung (10) nach einem der Ansprüche 2 bis 6, **dadurch gekennzeichnet, dass** in Blickrichtung (11) vor dem Anzeigebereich (20) ein weiterer und ebenfalls um die Drehachse (21) schwenkbarer Zeiger (70) vorgesehen ist, wobei insbesondere vorgesehen ist, dass der weitere schwenkbare Zeiger (70) von einer zweiten Gruppe von bevorzugt radial näher bei der Drehachse (21) angeordneten Lichtquellen der ersten Beleuchtungseinrichtung (41) beleuchtet vorgesehen ist und wobei insbesondere vorgesehen ist, dass der Anzeigebereich (20) von einer ersten Gruppe von gegenüber der zweiten Gruppe bevorzugt radial weiter von der Drehachse (21) beabstandet angeordneten Lichtquellen der ersten Beleuchtungseinrichtung (41) beleuchtet vorgesehen ist.

7. Anzeigevorrichtung (10) nach einem der vorhergehenden Ansprüche, **dadurch gekennzeichnet, dass** der Zeiger (30) und der weitere Zeiger (70) unabhängig von einander um die Drehachse (21) schwenkbar vorgesehen sind.

8. Anzeigevorrichtung (10) nach einem der vorhergehenden Ansprüche, **dadurch gekennzeichnet, dass** der Anzeigebereich (20) ein Ziffernblatt ist.

9. Anzeigevorrichtung (10) nach einem der vorhergehenden Ansprüche, **dadurch gekennzeichnet, dass** die erste Beleuchtungseinrichtung (41) und/oder die zweite Beleuchtungseinrichtung (51) eine oder mehrere Leuchtdioden umfasst.

10. Anzeigevorrichtung (10) nach einem der vorhergehenden Ansprüche, **dadurch gekennzeichnet, dass** das erste Licht (45) und das zweite Licht (55) von unterschiedlicher Farbe sind.

## Claims

1. Display device (10) for a motor vehicle with a display range (20) facing the direction of gaze (11), in which there is a swivel pointer (30) behind the display area (20) pivoting around an axis of rotation (21) in the direction of gaze (11), **characterised by** the fact that there is a second illumination source (51) attached to the swivel pointer (30) directly or indirectly, whereby the pointer (30) has a second optical fibre (32) for the transmission of second light (55) from the second illumination source (51), whereby in the direction of gaze (11) behind the swivel pointer (30) there is a printed circuit board (40) with a first illumination provided for it (41), whereby the swivel pointer (30) has a first optical fibre area (31) for the transport of first light (45) from the first illumination source (41) to the display area (20) or an outer edge (22) of the display area (20), whereby in the direction of gaze (11) in front of the display area (20) there is a further swivel pointer (70) also around the axis of rotation (21), whereby it is arranged that the further swivel pointer (70) is illuminated by a second group of light sources preferably radially closer to the axis of rotation (21) of the first illumination source (41) and is arranged that the display area (20) is illuminated by a first group of light sources arranged opposite the second group preferably radially further from the axis of rotation (21) of the first illumination source (41).

2. Display device (10) for a motor vehicle with a display area (20) facing the direction of gaze (11), whereby there is a swivel pointer (30) around an axis of rotation (21) in the direction of gaze (11) behind the display area (20), **characterised by** the fact that there is a second illumination source (51) directly or indirectly attached to the swivel pointer (30), whereby the pointer (30) has a second optical fibre area (32) for the transmission of second light (55) from the second illumination source (51), whereby there is also a first illumination source (41) also directly or indirectly attached to the swivel pointer (30), whereby the transmission of first light (45) from the first illumination source (41) to the display area (20) or an outer edge (22) of the display area (20) is ensured.

3. Display device (10) according to one of the preceding claims, **characterised by** the fact that the second illumination source (51) directly or indirectly attached to the swivel pointer (30), or the first and second illumination sources (41, 51) directly or indirectly attached to the swivel pointer (30) are electrically contacted by a means of contact (50) offsetting the swivel movement of the swivel pointer (30) around the axis of rotation (21), in particular a flexible printed circuit board.

4. Display device (10) according to one of the preceding claims, **characterised by** the fact that in the direction of gaze (11) behind the swivel pointer (30) there is a printed circuit board (40), whereby the means of contact (50) is mechanically connected by a connector (52), in particular a LIF connector or a ZIF connector, with the circuit board (40).

5. Display device (10) according to one of the preceding claims, **characterised by** the fact that the first lighting system (41) is arranged relative to the axis of rotation (21) radially further on the inside and that the second illumination device is arranged (51) relative to the axis of rotation (21) radially further out.

6. Display device (10) according to one of claims 2 to 6, **characterised by** the fact that in the direction of gaze (11) in front of the display area (20) there is another swivel pointer (70) also around the axis of rotation (21), whereby in particular it is arranged that the further swivel pointer (70) is illuminated by a second group of light sources of the first illumination source (41) preferably radially closer to the axis of rotation (21) and in particular it is arranged that the display area (20) is illuminated by a first group of light sources of the first illumination source (41) opposite the second group preferably radially further spaced from the axis of rotation (21) pd lit is.

7. Display device (10) according to one of the preceding claims, **characterised by** the fact that the pointer (30) and the further pointer (70) rotate independently of each other around the axis of rotation (21).

8. Display device (10) according to one of the preceding claims, **characterised by** the fact that the display area (20) is a dial.

9. Display device (10) according to one of the preceding claims, **characterised by** the fact that the first illumination source (41) and all the second illumination source (51) has one or more LEDs.

10. Display device (10) according to one of the preceding claims, **characterised by** the fact that the first light (45) and the second light (55) are of differing colour.

## Revendications

1. Dispositif d'affichage (10) pour véhicule, comportant une zone d'affichage (20) tournée vers le sens de vision (11), dans lequel il est prévu, dans le sens de vision (11), en aval de la zone d'affichage (20), un indicateur (30) pouvant pivoter autour d'un axe de rotation (21), **caractérisé en ce qu'**il est prévu un second dispositif d'éclairage (51) fixé directement ou indirectement à l'indicateur pivotant (30), l'indicateur (30) présentant une seconde zone à fibre optique (32) pour la transmission d'une seconde lumière (55) sortant du second dispositif d'éclairage (51) étant prévu, dans le sens de vision (11), en aval de l'indicateur pivotant (30), un circuit imprimé (40) équipé d'un premier dispositif d'éclairage placé dessus (41), l'indicateur pivotant (30) présentant une première zone de fibre optique (31) pour le transport d'une première lumière (45) sortant du dispositif d'éclairage (41) vers la zone d'affichage (20) et/ou vers un bord extérieur (22) de la zone d'affichage (20), étant prévu, dans le sens de vision (11), en amont de la zone d'affichage (20), un autre indicateur (70) pouvant également pivoter autour de l'axe de rotation (21), étant prévu que l'autre indicateur pivotant (70) soit éclairé par un second groupe de sources lumineuses du premier dispositif d'éclairage (41) disposées de préférence radialement plus près de l'axe de rotation (21) et étant prévu que la zone d'affichage (20) soit éclairée par un premier groupe de sources lumineuses disposées de préférence radialement plus loin de l'axe de rotation (21) du premier dispositif d'éclairage (41).

2. Dispositif d'affichage (10) pour véhicule, comportant une zone d'affichage (20) tournée vers le sens de vision (11), dans lequel il est prévu, dans le sens de vision (11), en aval de la zone d'affichage (20), un indicateur (30) pouvant pivoter autour d'un axe de rotation (21), **caractérisé en ce qu'**il est prévu, un second dispositif d'éclairage (51) fixé directement ou indirectement à l'indicateur pivotant (30), l'indicateur (30) présentant une seconde zone à fibre optique (32) pour la transmission d'une seconde lumière (55) sortant du second dispositif d'éclairage (51), étant prévu un premier dispositif d'éclairage (41) également fixé directement ou indirectement à l'indicateur pivotant (30), étant prévue la transmission de la première lumière (45) sortant du premier dispositif d'éclairage (41) vers la zone d'affichage (20) et/ou vers un bord extérieur (22) de la zone d'affichage (20).

3. Dispositif d'affichage(10) selon une des revendications précédentes, **caractérisé en ce qu'**il est prévu que le second dispositif d'éclairage (51) fixé directement ou indirectement à l'indicateur pivotant (30) ou les premier et second dispositifs d'éclairage fixés directement ou indirectement à l'indicateur pivotant (41, 51) soient mis en contact électrique au moyen d'un mouvement de pivotement du moyen de contact (50) compensant le mouvement de pivotement de l'indicateur pivotant (30) autour de l'axe de rotation (21), en particulier un circuit imprimé souple.

4. Dispositif d'affichage(10) selon une des revendications précédentes, **caractérisé en ce qu'**il est prévu un circuit imprimé (40) dans le sens de vision (11), en aval de l'indicateur pivotant (30), le moyen de contact (50) étant raccordé mécaniquement au moyen d'un raccord enfichable (52), en particulier un raccord enfichable LIF ou un raccord enfichable ZIF, au circuit imprimé (40).

5. Dispositif d'affichage(10) selon une des revendications précédentes, **caractérisé en ce que** le premier dispositif d'éclairage (41) est disposé plus loin radialement vers l'intérieur par rapport à l'axe de rotation (21) et que le second dispositif d'éclairage (51) est disposé plus loin radialement vers l'extérieur par rapport à l'axe de rotation (21) .

6. Dispositif d'affichage(10) selon une des revendications 2 à 6, **caractérisé en ce que**, dans le sens de vision (11), en amont de la zone d'affichage (20), il est prévu un autre indicateur (70) pouvant également pivoter autour de l'axe de rotation (21, étant notamment prévu que l'autre indicateur pivotant (41) soit éclairé par un second groupe de sources lumineuses du premier dispositif d'éclairage (41) disposées de préférence radialement plus près de l'axe de rotation (20) et étant notamment prévu que la zone d'affichage (20) soit éclairée par un premier groupe de sources lumineuses du premier dispositif d'éclairage (41) disposées de préférence radialement plus loin de l'axe de rotation (20).

7. Dispositif d'affichage(10) selon une des revendications précédentes, **caractérisé en ce qu'**il est prévu que l'indicateur (30) et l'autre indicateur (70) puissent pivoter indépendamment l'un de l'autre autour de l'axe de rotation (21).

8. Dispositif d'affichage(10) selon une des revendications précédentes, **caractérisé en ce que** la zone d'affichage (20) est un cadran.

9. Dispositif d'affichage(10) selon une des revendications précédentes, **caractérisé en ce que** le premier dispositif d'éclairage (41) et/ou le second dispositif d'éclairage (45) comprend une ou plusieurs diodes électroluminescentes.

10. Dispositif d'affichage(10) selon une des revendications précédentes, **caractérisé en ce que** la première lumière (45) et la seconde lumière (45) sont de couleurs différentes.
